# EUROPEAN PATENT SPECIFICATION

(11) **EP 0 381 266 B1**
(45) Date of publication and mention of the grant of the patent: **29.05.1996**
(21) Application number: 90200172.6
(22) Date of filing: 24.01.1990
(51) Int. Cl.: G11B 5/008, G11B 5/09, G11B 5/48

(54) **Longitudinal magnetic tape recording system, magnetic tape apparatus and magnetic head means.**
Magnetband-Längsaufzeichnungssystem, Magnetbandgerät und Magnetkopf.
Système d'enregistrement longitudinal de bandes magnétiques, appareil à bande magnétique et tête magnétique.

(30) Priority: 30.01.1989 NL 8900214; 05.07.1989 NL 8901712
(43) Date of publication of application: 08.08.1990
(73) Proprietor: Philips Electronics N.V., 5621 BA Eindhoven (NL)
(72) Inventor: Muller, Johannes Cornelius Antonius, NL-5656 AA Eindhoven (NL); Hoogendoorn, Abraham, NL-5656 AA Eindhoven (NL)
(74) Representative: Cuppens, Hubertus Martinus Maria

(56) References cited:
- DE-C- 877 207
- US-A- 4 752 840
- JOURNAL OF THE AUDIO ENGINEERING SOCIETY. vol. 32, no. 9, September 1984, NEW YORK, pages 640-646; N. SAKAMOTO et al.: "ON HIGH-DENSITY RECORDING OF THE COMPACT-CASSETTE DIGITAL RECORDER"
- PATENT ABSTRACTS OF JAPAN vol. 8, no. 68 (P-264)(1505) 30 March 1984,& JP-A-58 215706
- PATENT ABSTRACTS OF JAPAN vol. 8, no. 192 (P-298)(1629) 04 September 1984,& JP- A-59 079403
- PATENT ABSTRACTS OF JAPAN vol. 6, no. 152 (P-134)(1030) 12 August 1982,& JP-A- 57 071563 (SONY K.K.) 04 May 1982,
- PATENT ABSTRACTS OF JAPAN vol. 8, no. 105 (P-274)(1542) 17 May 1984,& JP-A-59 014116
- IBM TECHNICAL DISCLOSURE BULLETIN. vol. 28, no. 2, July 1985, ARMONK NY US page 558, "VARIABLE TRACK DENSITY MAGNETIC HEAD"
- PATENT ABSTRACTS OF JAPAN vol. 8, no. 51 (P-259)(1488) 08 March 1984,& JP-A-58 200412
- PATENT ABSTRACTS OF JAPAN vol. 10, no. 140 (P-458)(2197) 23 May 1986,& JP-A-60 258705
- PATENT ABSTRACTS OF JAPAN vol. 12, no. 119 (P-689)(2966) 14 April 1988,& JP-A- 62 245576
- FUNKSCHAU no. 19, September 1982, MUENCHEN DE pages 67 - 68; J. NEILS: "PCM- Kassettendeck mit Compactcassette"
- "Das Cassettenbuch zu Commodore 64 und VC-20",Paulissen, Data Becker, 1984, pages 52, 53, 60, 61, 70, 71, 80, 81, 106, 107.

## Description

The invention relates to a longitudinal magnetic-tape recording system comprising an apparatus and a cassette having a housing, which housing comprises two substantially parallel main walls and a plurality of transverse walls, accommodates two reels and a magnetic tape, which magnetic tape is wound at least partly on one of the reels and extends partly between the two reels across an opening formed in one of the transverse walls of the housing, which apparatus is constructed to cooperate with the cassette in a first position of the cassette and in a second position of the cassette, which second position is rotated through at least substantially 180° relative to the first position about an axis which extends parallel to the main walls perpendicularly to the transverse wall formed with the opening and through the centre of said transverse wall, which apparatus comprises magnetic-head means including at least one magnetic head, each head provided with a pattern of transmission gaps for reading and/or writing information in analog form on magnetic tape, and tape-transport means for the transport of magnetic tape past the magnetic-head means with a speed of transport.

The invention further relates to an apparatus for longitudinal magnetic-tape recording

The invention also relates to magnetic-head means for longitudinal magnetic-tape recording.

Such a system is generally known in the form of the standard Compact Cassette system comprising apparatuses for reading and/or writing information generally in the form of music, in analog form in longitudinal tracks on a magnetic tape. In this system the cassette is reversible, so that after reversal of the cassette recording and/or reproduction of the information on/from the magnetic tape can be continued without prior rewinding of the tape or replacement of the cassette. The information is situated in longitudinal tracks on the magnetic tape or is recorded on the magnetic tape in the longitudinal direction. This standard system is defined in IEC publication 94.

A disadvantage of this system is that the signal-to-noise ratio and the quality of the recorded signal itself are noticeably degraded in comparison with the original source signal.

The music quality is inferior to that of the Compact Disc system, even in the case of the best equipment and magnetic-tape cassettes of the Compact Cassette system. In order to upgrade the quality the prior art system has been improved in many respects, such as for example by the use of automatic azimuth control and a variety of noise reduction systems. These improvements make the equipment far more expensive and, in spite of this a quality comparable to that of the Compact Disc cannot be attained. As a result of this, high-quality apparatuses of the Compact Cassette system are far more expensive than simple Compact Disc apparatuses, although their quality is distinctly inferior.

However, a huge number of Compact Cassettes and associated recorders are in use in the market. It is estimated that there are approximately one billion recorders and that the number of cassettes is a multiple thereof.

A system having quality similar to that of the Compact Disc system is for example the R-DAT system. The disadvantage of this system is that it requires an entirely new magnetic tape cassette and magnetic tape apparatus with a helical-scan deck. This results in more expensive cassettes and cassette decks and the multitude of Compact Cassettes which are in use cannot be employed in conjunction with this system. Another proposal for a digital tape system has been published in the Journal of the Audio Engineering Society (Vol 32, No.9, September 1984). In this publication an apparatus is described with a digital head with 12 gaps which cooperates with a Compact Cassette with a special tape and which transports the tape at 95 mm/s which is double the speed used in the conventional Compact Cassette system. The disadvantage of this system is that the apparatus cannot read or record Compact Cassettes with conventional analog recordings and that the consumption of tape is twice as high as with the Compact Cassette system. The principal disadvantage of such new systems resides in the fact that the market is difficult to penetrate because these systems are wholly incompatible with the well-known Compact Cassette system. This incompatibility means a larger expenditure for the consumer and huge and insecure investments for the manufacturers and the software industry.

It is an object of the invention to construct a system in such a way that the signal-to-noise ratio and the signal itself are improved considerably with a minimal adaptation of the system, enabling a gradual market penetration to be achieved.

To this end the magnetic tape recording system according to the invention is defined as worded in claim 1.

By recording and reading the information in digital form the tape noise has no influence on the signal and, moreover, this provides an extended frequency range, so that the recorded signal itself has also improved. The novel system does not require a new type of cassette, it is for example possible to use the current Compact Cassettes. Moreover, an apparatus of the second type need not differ much from an apparatus of the first type, apart from the magnetic-head means and some electronic devices. This enables a considerably improved new system to be obtained with minimum adaptations to a prior-art system. The system in accordance with the invention is also characterized in that the magnetic head means of the second type are constructed also to at least information from the recorded on the magnetic tape in analog form. Thus, the system in accordance with the invention is compatible with the prior art system at least in respect of the reproduction of information recorded on the magnetic tape in analog form. Therefore, prerecorded analog cassettes can always be played back on apparatuses of the second type so that it is not necessary for the consumer to have an apparatus of the first type in addition to the novel apparatus of the second type.

When the same or substantially the same cassettes are employed the same speed of tape transport results in equal playing times both for the known apparatuses of the first type and for the novel apparatuses of the second type. The information in digital form should be expanded or compressed in order to enable the information to be reproduced from or recorded in a reduced number of tracks of the magnetic tape for the given speed of tape transport. The number of tracks is then reduced relative to the number of tracks to be employed without the use of expansion and compression means. This data compression and expansion is also of significance in view of the requirements to be imposed on a magnetic head of the second type. This is because the number of gaps of the magnetic head by which said data is to be processed depends on the data reduction and the write frequency. In the absence of data reduction approximately 20 transmission gaps would be needed to record the information at the customary recording frequency. The amount to be written per unit of time can be reduced by the use of data compression, so that a substantially smaller number of transmission gaps can be used at the same recording frequency. The number of tracks with which the information in digital form is recorded on the magnetic tape and/or is read from the magnetic tape is limited in view of the problems encountered in the manufacture of magnetic heads for reading and/or writing information in a larger number of tracks. In order to enable the information in digital form to be read with the same tape-transport speed as used for reading information in analog form with said limited number of tracks the information should be encoded in such a way that the same amount of data is obtained as in the case of the data compression described above.

It is to be noted that a data recorder is know from "Das Cassettenbuch zu Commodore 64 und UC-20", Paulissen, Data Becker, 1984, Pages 52, 53, 60, 61, 70, 71, 80, 81, 106 and 107. This data recorder records data in the form of pulses on a cassette tape by means of a magnetic head having one gap.

An embodiment of the system in accordance with the invention, in which the magnetic head of the first type comprises a plurality of parallel transmission gaps formed in a head face in line with one another, which gaps form at least one pattern for reading and/or writing information in an analog form on the magnetic tape in one direction of tape transport, the pattern being situated in the head face, wholly at one side of a central line of the head face perpendicular to the transmission gaps in the head face, is characterized in that when the head face of the magnetic head of the second type is projected onto the head face of the magnetic head of the first type, at least a projection of a transmission gap of the magnetic head of the second type is obtained on every transmission gap of the magnetic head of the first type. This enables information recorded on a magnetic tape in analog form by a magnetic head of the first type to be read with a magnetic head of the second type.

A further embodiment of the system in accordance with the invention is characterized in that the transmission gaps of the magnetic head of the second type form a further pattern for reading and/or writing information on the magnetic tape in another direction of tape transport opposite to said direction of tape transport. An advantage of this is that the magnetic head need not be reversed or set to another position when an auto-reverse system is used.

Another embodiment of the system in accordance with the invention is characterized in that the magnetic head of the second type comprises a plurality of at least substantially parallel transmission gaps formed in a head face substantially in line with one another, which gaps form at least one pattern for reading and/or writing information on the magnetic tape in a direction of tape transport, the pattern being situated in the head face, wholly at one side of a central line of the head face perpendicular to the transmission gaps. An advantage of this is that an analog track can be read with a plurality of gaps, so that signal losses are smaller than in the case of reading by means of only one gap. A further advantage is that the other side of the head face can be used for an analog part.

Yet a further embodiment of the system in accordance with the invention is characterized in that the pattern of transmission gaps of the magnetic head of the second type comprises nine gaps, of which one gap constitutes an auxiliary gap for reading and/or writing auxiliary information and the other eight gaps form main gaps for reading and/or writing the information. When eight gaps are used the amount of information is found to be adequate in order to achieve that after expansion during reproduction hardly any differences can be detected in comparison with the original signal. Moreover, the auxiliary gap enables information, relating to for example the residual time available on and the elapsed time of the tape and/or data relating to the information on the tape, to be read and/or to be recorded.

The invention further relates to a magnetic tape apparatus as defined in claim 6.

By recording and reading the information in digital form the tape noise has no influence on the signal and, moreover, this provides an extended frequency range, so that the recorded signal itself has also improved. The novel apparatus does not require a new type of cassette, it is for example possible to use the current Compact Cassettes. Moreover, an apparatus of the second type need not differ much from an apparatus of the first type, apart from the magnetic-head means and some electronic devices. This enables a considerably improved new apparatus to be obtained with minimum adaptations to a prior-art apparatus. The apparatus in accordance with the invention is also characterized in that the magnetic head means of the second type are constructed also to at least information from the recorded on the magnetic tape in analog form. Thus, the apparatus in accordance with the invention is compatible with the prior art apparatus at least in respect of the reproduction of information recorded on the magnetic tape in analog form. Therefore, prerecorded analog cassettes can always be played back on apparatuses of the second type so that it is not necessary for the consumer to have an apparatus of the first type in addition to the novel apparatus of the second type.

In an embodiment of such an apparatus the speed of tape transport is 47.5 mm/s. This implies that both type of apparatuses have the same speed of tape transport.

Another embodiment of such a magnetic-tape apparatus is characterized in that the magnetic-head means of the second type comprise a magnetic head of the second type which is constructed to read both information in analog form and information in digital form, and which magnetic head means comprise a further magnetic head of the second type for recording information at least in digital form. The use of a separate read head and a separate write head has the advantage that the heads can be manufactured more simply.

A further embodiment of the magnetic tape apparatus in accordance with the invention is characterized in that the magnetic head of the second type, comprises a plurality of parallel transmission gaps which are arranged in two sub-patterns, the first sub-pattern corresponding to a pattern of transmission gaps for at least reading information in digital form on the magnetic tape in one direction of tape transport, and the second sub-pattern corresponding to a pattern of transmission gaps for at least reading information in analog form on the magnetic tape in one direction of tape transport. This magnetic head has the advantage that the analog signal on the magnetic tape can be read with less losses than in the case of magnetic heads which read the analog signal by means of one of the gaps of the gap pattern for reading and/or writing information in digital form, because the transmission gaps for reading information in analog form have substantially the same width as the analog information tracks on the magnetic tape whilst the transmission gaps for reading digital information are much narrower.

An embodiment of the magnetic tape apparatus in accordance with the invention has at least one magnetic head of the second type which is rotatable through at least substantially 180° about an axis perpendicular to the head face. This enables auto-reverse operation to be achieved with apparatuses of the second type, in the same way as in the prior-art apparatuses of the first type, as described for example in European Patent 0,120,518 B1 (PHN 10.602, herewith incorporated by reference), so that no new adaptations are needed.

In European Patent 0,120,518 B1 an apparatus is described with a mechanism comprising a magnetic head mounted in a cylindrical body, which is rotatable mounted on a head mounting plate in a bearing block which comprises two stops, between which a projection which is rigidly connected to the head mount can rotate through 180 degrees. This kind of apparatus is typical for Compact Cassette apparatuses of the type having a so-called auto-reverse feature for automatically playing the tape in the reverse direction after having reached the end of the tape in the forward play direction.

The invention also relates to a magnetic-head means as defined in claim 13.

By recording and reading the information in digital form the tape noise has no influence on the signal and, moreover, this provides an extended frequency range, so that the recorded signal itself has also improved. The novel magnetic-head means does not require a new type of cassette, it is for example possible to use the current Compact Cassettes. The magnetic-head means in accordance with the invention is also characterized in that the magnetic head means are constructed also to at least read information from the recorded on the magnetic tape in analog form. Thus, the magnetic-head means in accordance with the invention is compatible with the prior art magnetic-head means at least in respect of the reproduction of information recorded on the magnetic tape in analog form. Therefore, prerecorded analog cassettes can always be played back on apparatuses with magnetic-head means so that it is not necessary for the consumer to have an apparatus with magnetic-head means of the first type in addition to the apparatus with magnetic-head means of the second type.

Said two transmission gaps for at least reading information in analog form may have the same widths as the transmission gaps of the well-known magnetic heads as used in the Compact Cassette system. This enables information in analog form recorded on a magnetic tape in accordance with the Compact Cassette system to be read in an optimum manner. For reading and writing information in digital form eight transmission gaps are provided. The number of transmission gaps is selected in such a way that for the given tape-transport speed and data coding the information can be written on or read from the magnetic tape. The transmission gap for reading and writing auxiliary information is remote from the central line of the head face. A further transmission gap for reading and/or writing auxiliary information may be provided in the half of the head face where the two transmission gaps for at least reading information in analog form are situated, in order to insert auxiliary information during analog recording in accordance with the Compact Cassette standard. Both during reading information in analog form and during reading or writing information in digital form auto-reverse operation is possible by turning the magnetic head through 180^{o}.

In order to achieve that the magnetic head need not be displaced for auto-reverse operation a further embodiment of the magnetic head is characterized in that the magnetic head comprises two groups of parallel transmission gaps which are disposed in line with each other in a head face which is bisected by a central line perpendicular to the transmission gaps, which groups each comprise two subgroups, being a first subgroup having transmission gaps in one half of the head face, for reading and/or writing information in digital form and a second subgroup having transmission gaps in the other half of the head face for at least reading information in analog form, a first subgroup of one of the groups and a second subgroup of the other group of transmission gaps being provided in each half of the head face.

Embodiments of the invention will now be described in more detail, by way of example, with reference to the accompanying drawings. In the drawings:
Fig. 1 shows a magnetic-tape apparatus of the first type,
Fig. 2 shows an example of a cassette,
Fig. 3 shows an embodiment of a magnetic tape apparatus of the second type,
Fig. 4 shows another embodiment of a magnetic tape apparatus of the second type,
Fig. 5 shows an embodiment of a magnetic head of the first type,
Fig. 6 shows a first embodiment of a magnetic head of the second type,
Fig. 7 shows a second embodiment of a magnetic head of the second type,
Fig. 7a shows how the transmission gaps and their mirror images are disposed the case of a mirror-imaging relative to the central line of the magnetic head of the second type shown in Fig. 7,
Fig. 7b shows the projection of the transmission gaps of the second embodiment of the magnetic head of the second type on the transmission gaps of a magnetic head of the first type,
Fig. 8a shows a third embodiment of a magnetic head of the second type,
Fig. 8b shows another embodiment of the magnetic head shown in Fig. 8a,
Fig. 9 shows two magnetic heads of the second type constructed for use in the apparatus shown in Fig. 4,
Fig. 10 shows a further embodiment of a magnetic head of the second type provided with two patterns of transmission gaps, and
Fig. 11 shows yet another magnetic head of the second type having two patterns of transmission gaps.

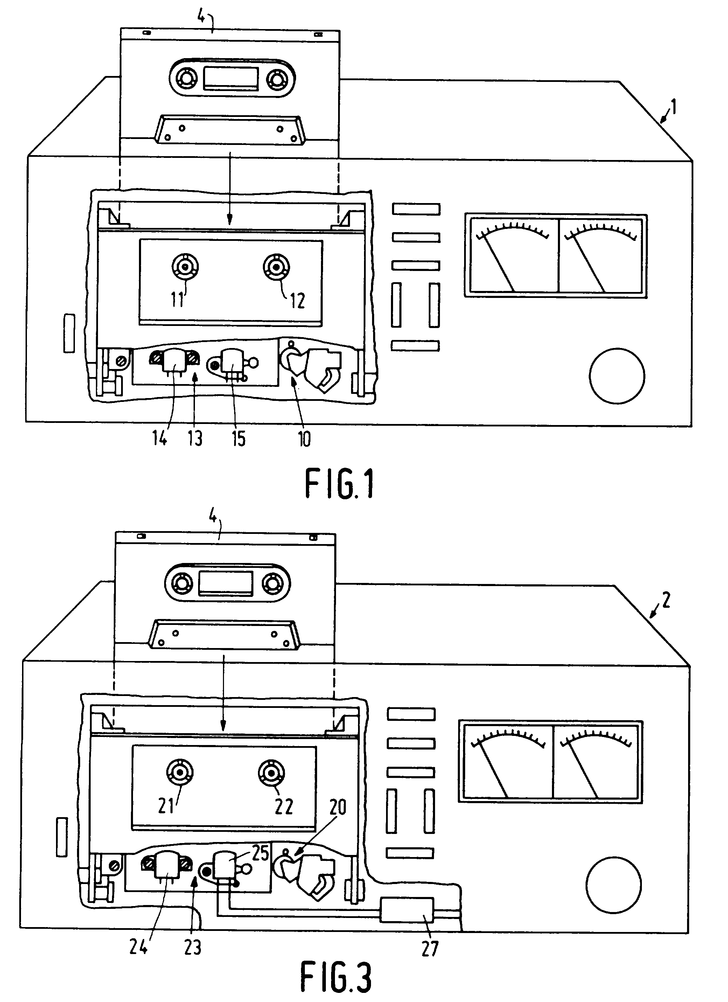

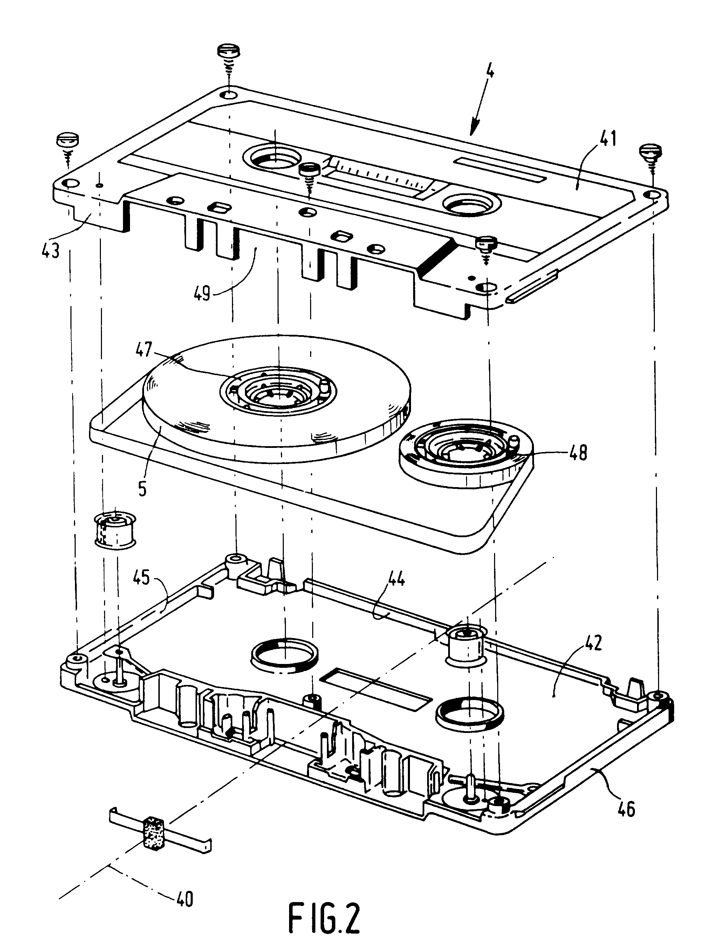

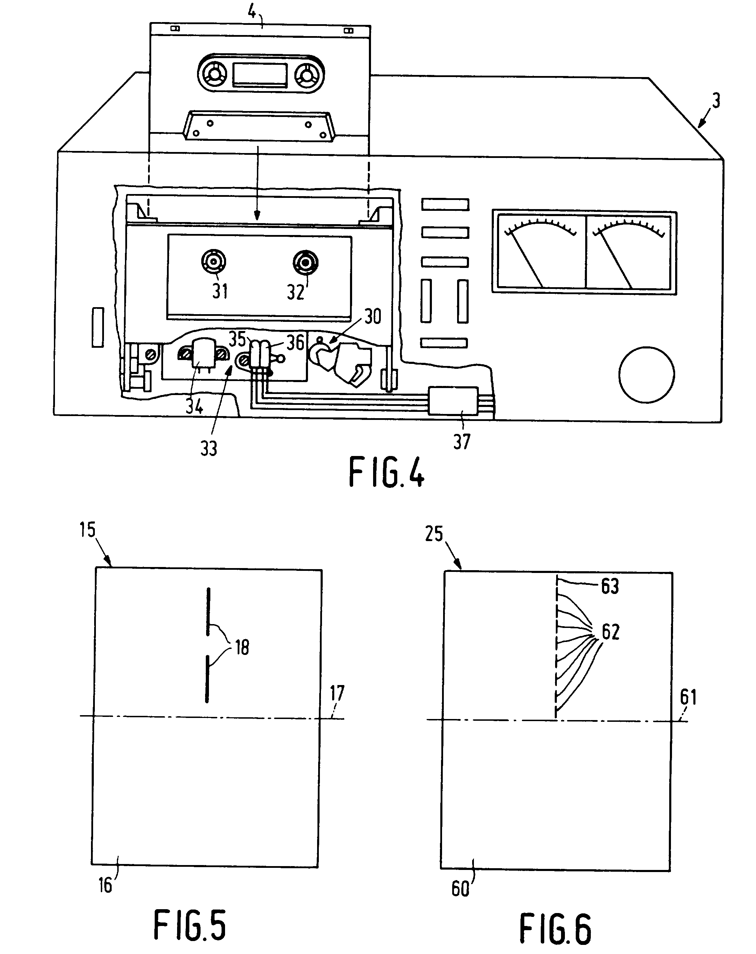

An embodiment of a system in accordance with the invention comprises a magnetic-tape apparatus of the first type shown in Fig. 1, a magnetic tape apparatus of the second type shown in Fig. 3,and a cassette in the form of a well-known audio cassette 4 (a "Compact Cassette" as standardized in IEC publication no. 94-7) shown in Fig. 2.

The magnetic-tape apparatus 1 of the first type shown in Fig. 1 is constructed to read and/or write information in analog form on a magnetic tape accommodated in the cassette 4. For this purpose the apparatus 1 comprises tape-transport means, comprising a capstan/pressure roller combination 10, drive spindles 11 and 12, and magnetic head means 13, in the present embodiment represented as an erase head 14 and a magnetic head 15 of the first type for reading and/or writing information in analog form. This apparatus is a cassette recorder of a generally known type, so that for the sake of brevity no further details will be given.

Fig. 2 shows the cassette 4 in greater detail. The cassette comprises a housing having two main walls 41 and 42 and four transverse walls 43, 44, 45 and 46. The housing accommodates the magnetic tape 5, which is wound on reels 47 and 48 and which extends partly across an opening 49 formed in the transverse wall 43. The cassette 4 is constructed to cooperate with the apparatus 1 in a first position as shown in Fig. 1 and in a second position obtained by turning the cassette 4 through 180° about an axis of rotation 40 shown in Fig. 2.

The magnetic tape apparatus 2 of the second type shown in Fig. 3 is also constructed to cooperate with the cassette 4. This apparatus 2 comprises a capstan/pressure roller combination 20 and drive spindles 21 and 22. The magnetic head means 23 comprise an erase head 24 and a magnetic head 25 of the second type. The magnetic head 25 is constructed to read and write information in digital form and to read information in analog form. For reading and writing information in digital form the apparatus 2 further comprises compression and expansion means 27. These means are needed to write the information in digital form of the magnetic tape or to read said information from the magnetic tape in a limited number of information tracks with the same tape-transport speed as in the apparatus 1 of the first type.

Fig. 4 shows another embodiment of the apparatus 3 of the second type. This apparatus again comprises a capstan/pressure roller combination 30, drive spindles 31 and 32, compression and expansion means 37, and magnetic-head means 33. The magnetic head means 33 comprise an erase head 34 and two magnetic-heads of the second type, i.e. a magnetic head 35 for reading information in analog or in digital form, and a magnetic head 36 for recording information in digital form.

The apparatuses 2 and 3 of the second type shown in Figs. 3 and 4 differ only slightly from the apparatus 1 of the first type. The differences mainly reside in different magnetic-head means 23, 33 and the presence of digital electronic circuits such as compression and expansion means 27, 37 and the necessary analog/digital and digital/analog converters.

Fig. 5 shows a prior-art magnetic head 15 of the first type, which has two transmission gaps 18 disposed in one half of the head face 16 which is bisected by a central line 17. This magnetic head 15 is configured to read and write information in analog form.

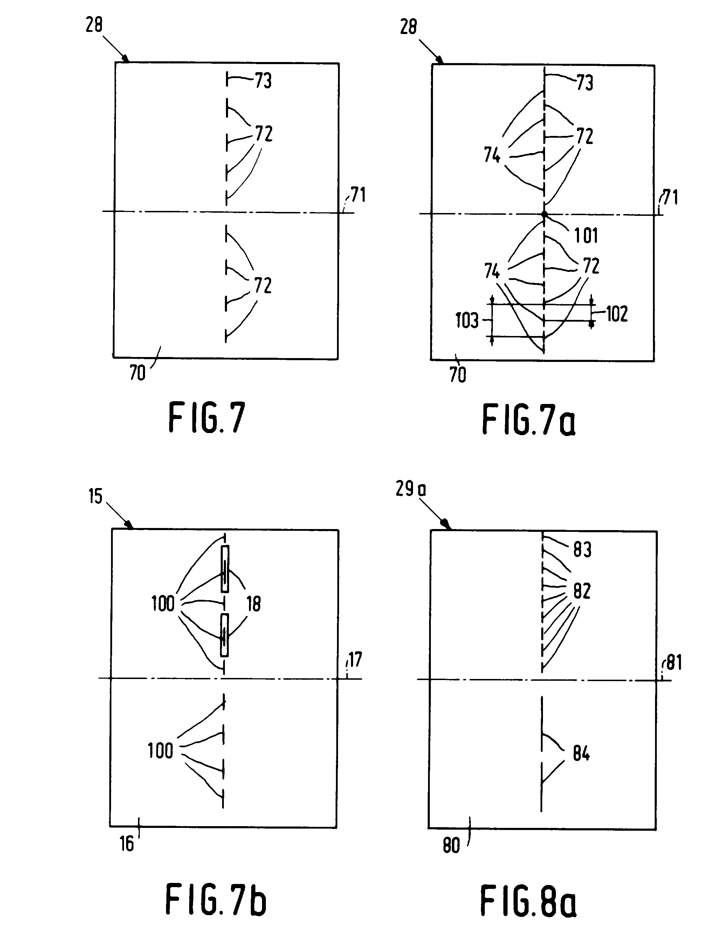

Figs. 6, 7, 8(a) and 8(b) show embodiments of magnetic heads 25, 28 and 29 of the second type, which are constructed for use in the apparatus 2 of the second type shown in Fig. 3. In the magnetic head 25 shown in Fig. 6 the transmission gaps 62 and 63 are also disposed in one half of a head face 60 which is bisected by a central line 61. In the magnetic head 28 shown in Fig. 7 the transmission gaps 72 and 73 are divided over the entire width of the head face 70 in such a way that in the case of mirror-imaging relative to the central line 71 the mirror images 74 of the transmission gaps 72, 73 will be situated between the transmission gaps 72, 73 themselves without any overlap, see Fig. 7a. In addition to the track pattern of transmission gaps as shown in Fig. 6, the embodiment of the magnetic head 29a of the second type shown in Fig. 8(a) has a further track pattern comprising two transmission gaps 84 for reading information in analog form. This magnetic head 29a may be constructed from two halves. The compound magnetic head 29a can be obtained by combining one half of the magnetic head 25 shown in Fig. 6 with one half of the prior-art magnetic head 15 shown in Fig. 5. Alternatively, the magnetic head 29a can also be constructed as an integral unit by integrating the transmission gaps 82, 83 and 84 in one head.

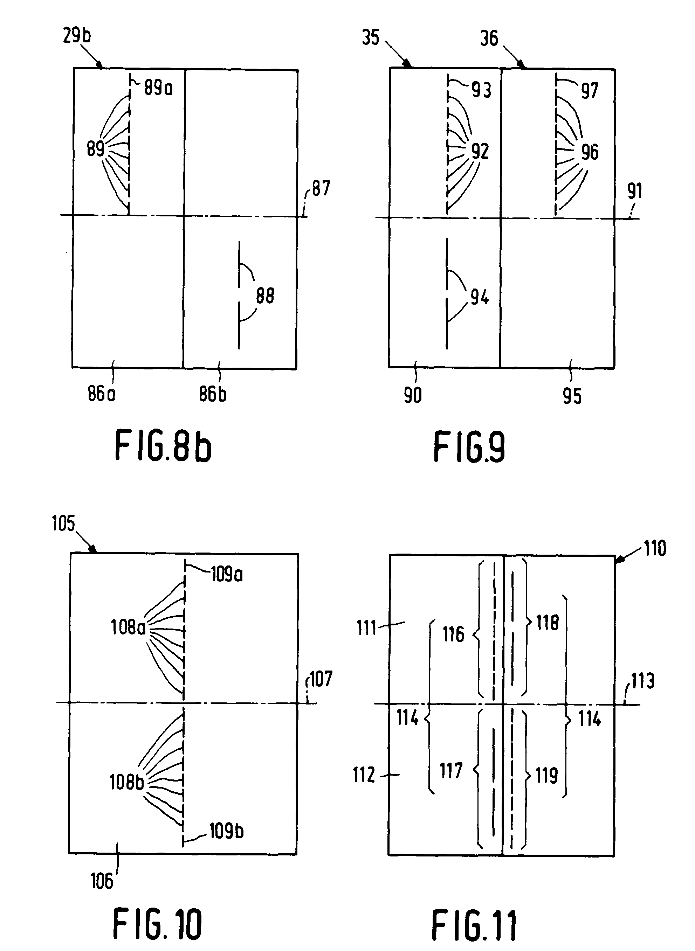

Fig. 8b shows another modification of a compound magnetic head 29b. In this modification the prior-art magnetic head 15 shown in Fig. 5 and the magnetic head 25 shown in Fig. 6 are juxtaposed. This construction can be manufactured more simply than that shown in Fig. 8a. The magnetic head 29b has two head faces 86a and 86b. In one half situated at one side of the central line 87 the head face 86a has main gaps 89 and an auxiliary gap 89a for digitally reading and writing information. In the other half at the other side of the central line 87 the head face 86b has the transmission gaps 88 for at least reading analog information. The auxiliary transmission gaps 63, 73, 83 and 89a are constructed to read and write auxiliary information. This auxiliary information may include for example data on the information recorded on the tape or data on the position of the head relative to the beginning or end of the tape. The main transmission gaps 62, 72, 82 and 89 are configured to read and write information in digital form. In addition, the gaps 62 and 72 are configured to read information in analog form. When the head face 70 of the magnetic head 28 of the second type is projected onto the head face 16 of the magnetic head 15 of the first type at least one projection 100 of a transmission gap of the magnetic head 28 is situated on every transmission gap 18 of the magnetic head 15, see Fig. 7b. Preferably, a projection 100 of a transmission gap of the magnetic head 28 of the second type is situated on the centre of each transmission gap 18 of the magnetic head 15 of the first type, as is illustrated in Fig. 7b. For auto-reverse operation the magnetic heads 25, 28 and 29 can be rotated through 180° about the axis 101 to cooperate with the track pattern of the information on the magnetic tape for the purpose of reading and/or writing in the reverse direction of tape transport, see Fig. 7a. The magnetic head 28 shown in Fig. 7 can be moved over a distance 102 for the purpose of auto-reverse operation, see Fig. 7a. This distance 102 should be substantially equal to half the distance 103 between the centres of two adjacent transmission gaps 72.

Fig. 9 shows a combination of two magnetic heads 35 and 36 of the second type suitable for use in the apparatus shown in Fig. 4. The magnetic head 35 is configured both to read information in digital form by means of the transmission gaps 92 and 93 and to read information in analog form by means of the transmission gaps 94. The magnetic head 36 is constructed to write information in digital form by means of the gaps 96 and 97. The gaps 93 and 97 constitute the auxiliary transmission gaps and the gaps 92 and 96 constitute the main transmission gaps. The eight main transmission gaps 92, 96 and one auxiliary transmission gap 93, 97 are situated in one half of the head face 90 which is bisected by the central line 91 and the transmission gaps 94 for the information in analog form are situated in the other half.

Fig. 10 shows a magnetic head 105 of the second type, which is formed with two patterns of transmission gaps. One pattern comprising the auxiliary transmission gap 109a and the main transmission gap 108a, is adapted to cooperate with the magnetic tape in one direction of tape transport. The other pattern, comprising the auxiliary transmission gap 109b and the main transmission gaps 108b, is adapted to cooperate with the magnetic tape in another direction of tape transport, opposite to the said direction of tape transport. As a result of this, it is not necessary to rotate or to displace the head in the case of auto-reverse operation. The operation of the magnetic head can be adapted to tape transport in the opposite direction by deactivating the operative pattern and by activating the other pattern.

The associated gaps of a pattern of the magnetic head 105 shown in Fig. 10 are all situated in one half of the head face 106, which is bisected by the central axis 107. Obviously it is also possible to juxtapose one gap of a pattern and a gap of the other pattern in order to obtain a magnetic head having two interdigitated gap patterns.

Fig. 11 shows a magnetic head 110 which is very suitable for auto-reverse operation, because the magnetic head need not be rotated or moved for this purpose. A central line 113 bisects the head face into two halves 111 and 112. Each half is provided with a first subgroup, 116 and 119 respectively, of transmission gaps for reading or writing information in digital form and with a second subgroup, 117 and 118 respectively, for at least reading information in analog form.

In the foregoing a number of embodiments have been described with reference to diagrammatic Figures merely by way of illustration. However, the invention is not limited to the embodiments described herein, numerous other embodiments which utilise the inventive principle in a way other than described, being possible within the scope of the invention as defined in the appended Claims, said principle beingthat a known system for a longitudinal analog recording is extended to obtain digital longitudinal recording by the addition of digital recorders. Moreover, such a system provides substantial advantages if use is made of the inventive principle of constructing digital recorders in such a way that they are compatible with the original recording system, at least in so far as they are adapted to at least play back cassettes with an analog recording.

For example, in contradistinction to the embodiments described herein, embodiments of the invention are possible in which the apparatuses are constructed only for the reproduction of digital and analog signals, for example car cassette players or portable cassette players or in which the apparatuses are capable both of analog and digital reading and recording. Moreover, it is possible to dispense with the erase head. By appropriately guiding and positioning the tape relative to the magnetic head the tracks already present can be overwritten almost completely with tracks containing new information to be recorded.

## Claims

1. A longitudinal magnetic-tape recording system comprising
- cassettes (4) each having a housing, which housing comprises two substantially parallel main walls (41, 42) and a plurality of transverse walls (43, 44, 45, 46), and accommodates two reels (47, 48) and a magnetic tape (5), which magnetic tape (5) is wound at least partly on one of the reels (47, 48) and extends partly between the two reels (47, 48) across an opening (49) formed in one of the transverse walls (43) of the housing,
- an apparatus (1) of a first type which is constructed to cooperate with one of said cassettes (4) in a first position of the cassette (4) and in a second position of the cassette (4), which second position is rotated through at least substantially 180° relative to the first position about an axis which extends parallel to the main walls (41, 42) perpendicularly to the transverse wall (43) formed with the opening (49) and through the centre of said transverse wall (43), which apparatus of a first type (1) comprises magnetic-head means of a first type (13) including at least one magnetic head of a first type (15) for reading and/or writing information in analog form on magnetic tape (5), and tape-transport means (10, 11, 12) for the transport of magnetic tape (5) past the magnetic-head means of the first type (13) with a speed of transport, and
- an apparatus (2; 3) of a second type, which is constructed to cooperate with a cassette (4) and which comprises magnetic-head means (23; 33) of a second type comprising a magnetic head (25; 35, 36; 29a; 28; 105; 110) of a second type, the magnetic-head means (23 ; 33) of the second type being constructed to read and/or write information in digital form in longitudinal tracks on the magnetic tape (5) and being constructed also, to at least read information in analog form from the magnetic tape (5), the apparatus of the second type comprising tape-transport means (10, 11, 12) for the transport of the magnetic tape (5) past the magnetic-head means of the second type (13) with said speed of transport, and comprising, in case the magnetic head means of the second type are constructed to read information in digital form, expansion means (27; 37) for expanding information in digital form read from the magnetic tape having said speed of transport a digital/analog converter and, in case the magnetic head means of the second type are constructed to write information in digital form, an analog/digital converter and compression means for compressing information in digital form.

2. A system as claimed in Claim 1, in which the magnetic head (15) of the first type comprises a plurality of parallel transmission gaps (18) formed in a head face (16) in line with one another, which gaps (18) form at least one pattern for reading 5 and/or writing information in analog form on magnetic tape (5) in one direction of tape transport, the pattern being situated in the head face (16), wholly at one side of the central line (17) of the head face (16) perpendicular to the transmission gaps (18), characterized in that when the head face (60, 70) of the magnetic head (25, 28) of the second type is projected onto the head face (16) of the magnetic head (15) of the first type, at least a projection (100) of a transmission gap (62, 63 ; 72, 73) of the magnetic head (60, 70) of the second type is obtained on every transmission gap (18) of the magnetic head (15) of the first type.

3. A system as claimed in Claim 2, characterized in that the transmission gaps (108a, 108b, 109a, 109b) of the magnetic head (105) of the second type form a 5 further pattern for reading and/or writing information on magnetic tape (5) in another direction of tape transport, opposite to said direction of tape transport.

4. A system as claimed in Claim 1, characterized in that the magnetic head (25) of the second type comprises a plurality of at least substantially parallel transmission gaps (62, 63) formed in a head face (60) substantially in line with one another, which gaps (62, 63) form at least one pattern for reading and/or writing information on magnetic tape (5) in a direction of tape transport, the pattern being situated in the head (25) face wholly at one side of a central line (61) of the head face perpendicular to the transmission gaps (62, 63).

5. A system as claimed in any one of the preceding Claims 2 to 4, characterized in that the pattern of transmission gaps (62, 63) of the magnetic head (25) of the second type comprises nine gaps, of which one gap (63) forms an auxiliary gap for reading and/or writing auxiliary information and the other eight gaps (62) form main gaps for reading and/or writing the information.

6. A magnetic-tape apparatus for at least reproducing audio signals from cassettes according to the Compact Cassette Standard according to IEC publication 94 comprising
- magnetic head means being constructed to read and/or write information in digital form and to at least read information in analog form in longitudinal tracks on a magnetic tape (5),
- tape-transport means (10, 11, 12) for the transport of the magnetic tape past the magnetic-head means with a speed of transport according to said IEC publication,
- in case the magnetic head means are constructed to read information in digital form, expansion means (27; 37) for expanding information in digital form read from the magnetic tape having said speed of transport and a digital/analog converter, and
- in case the magnetic head means are constructed to write information in digital form, an analog/digital converter and compression means for compressing information in digital form.

7. A magnetic tape apparatus as claimed in Claim 6, characterized in that the magnetic head means comprise a magnetic head (25) having a plurality of at least substantially parallel transmission gaps (62, 63) formed in a head face (60) substantially in line with one another, which gaps (62, 63) form at least one pattern for reading and/or writing information on magnetic tape (5) in a direction of tape transport, the pattern being situated in the head (25) face wholly at one side of a central line (61) of the head face perpendicular to the transmission gaps (62, 63).

8. A magnetic tape apparatus as claimed in Claim 7, characterized in that the transmission gaps (108a, 108b, 109a, 109b) of the magnetic head (105) form a further pattern for reading and/or writing information on magnetic tape (5) in another direction of tape transport, opposite to said direction of tape transport.

9. A magnetic tape apparatus as claimed in Claim 7 or 8, characterized in that the pattern of transmission gaps (62, 63) of the magnetic head (25) comprises nine gaps, of which one gap (63) forms an auxiliary gap for reading and/or writing auxiliary information and the other eight gaps (62) form main gaps for reading and/or writing the information.

10. A magnetic tape apparatus as claimed in any one of Claims 6 to 9, characterized in that the magnetic head means (23; 33) comprise a magnetic head (35) which is constructed to read both information in analog form and information in digital form, and which magnetic-head means (23; 33) comprise a further magnetic head (36) of the same type for recording information at least in digital form.

11. A magnetic-tape apparatus as claimed in any one of the Claims 6 to 10, characterized in that the magnetic head means (29a) comprises a plurality of parallel transmission gaps (82, 83, 84) which are arranged in two sub-patterns, the first sub-pattern corresponding to a pattern of transmission gaps (82, 83) for at least reading information in digital form on magnetic tape in one direction of tape transport, and the second sub-pattern corresponding to a pattern of transmission gaps (84) for at least reading information in analog form on magnetic tape in one direction of tape transport.

12. A magnetic-tape apparatus as claimed in any one of the preceding Claims 7, 10 or 11, characterized in that at least one magnetic head (25 ; 28; 29a; 35, 36) of the second type is rotatable through at least substantially 180° about an axis perpendicular to the head face (60; 70;80; 90, 95).

13. Magnetic-head means for use in a system as claimed in any one of the claims 1 to 6 or for use as magnetic-head means in an apparatus as claimed in any one of the claims 7 to 14, the magnetic-head means (23 ; 33) comprising a magnetic head (35, 36; 29a; 110) of a second type, the magnetic-head means (23; 33) being constructed to read and/or write information in digital form in longitudinal tracks on magnetic tape (5) and being constructed also, to at least read information in analog form from magnetic tape (5), the magnetic head (35; 36; 29a; 110) comprising eleven parallel transmission gaps, which gaps are disposed in line with one another in a head face, which head face is bisected by a central line perpendicular to the transmission gaps, nine of said transmission gaps having a first width being configured to read and/or write information in digital form and two further of said transmission gaps having a second width being configured to at least read information in analog form, nine transmission gaps for reading and/or writing information in digital form being provided in one half of the head face, and the two transmission gaps for at least reading information in analog form being provided in the other half of the head face.

14. Magnetic-head means claimed in Claim 13, characterized in that the magnetic head (110) comprises two groups (114) of eleven parallel transmission gaps which are disposed in line with each other in a head face which is bisected by a central line (113) perpendicular to the transmission gaps, which groups (114) each comprise two subgroups, being a first subgroup (116) having nine transmission gaps in one half of the head face (111), for reading and/or writing information in digital form and a second subgroup (117) having two transmission gaps in the other half of the head face (112) for at least reading information in analog form, a first subgroup (116; 119) of one of the groups (114) and a second subgroup (117; 118) of the other group (114) of transmission gaps being provided in each half of the head face (111, 112).

## Patentansprüche

1. Magnetband-Längsaufzeichnungssystem, mit
- Kassetten (4) mit je einem Gehäuse, das zwei im wesentlichen parallele Hauptwände (41, 42) und eine Vielzahl von Querwänden (43, 44, 45, 46) umfaßt und zwei Bandwickelträger (47, 48) und ein Magnetband (5) aufnimmt, wobei das Magnetband (5) wenigstens teilweise auf einen der Bandwickelträger (47, 48) gewickelt ist und sich teilweise zwischen den beiden Bandwickelträgern (47, 48) über eine Öffnung (49) erstreckt, die in einer der Querwände (43) des Gehäuses ausgebildet ist,
- einer Vorrichtung (1) einer ersten Art, die so aufgebaut ist, daß sie mit einer der genannten Kassetten (4) in einer ersten Position der Kassette (4) und in einer zweiten Position der Kassette (4) zusammenwirkt, welche zweite Position im wesentlichen bis wenigstens 180° bezüglich der ersten Position um eine Achse gedreht wird, die sich parallel zu den Hauptwänden (41, 42) senkrecht zur Querwand (43) erstreckt, die mit einer Öffnung (49) und bis zum Mittelpunkt der genannten Querwand (43) ausgebildet ist, wobei diese Vorrichtung einer ersten Art (1) eine Magnetkopfeinrichtung einer ersten Art (13) enthält einschließlich wenigstens eines Magnetkopfes einer ersten Art (15) zum Lesen und/oder Schreiben von Informationen in analoger Form auf dem Magnetband (5) und eine Bandtransporteinrichtung (10, 11, 12) zum Transportieren des Magnetbandes (5) an der Magnetkopfvorrichtung der ersten Art (13) vorüber mit einer Transportgeschwindigkeit, und
- einer Vorrichtung (2,3) einer zweiten Art, die zum Zusammenwirken mit einer Kassette (4) vorgesehen ist und Magnetkopfmittel (23, 33) einer zweiten Art aufweist mit einem Magnetkopf (25; 35, 36; 29a; 28; 105; 110) einer zweiten Art, wobei die Magnetkopfmittel (23; 33) der zweiten Art zum Lesen und/oder Schreiben von Information in digitaler Form in Längsspuren auf dem magnetband (5) vorgesehen sind und ebenfalls dazu vorgesehen sind, wenigstens Information in analoger Form von dem Magnetband (5) zu lesen, wobei die Vorrichtung der zweiten Art Bandtransportmittel (10, 11, 12) aufweist, zum Transportieren des Magnetbandes (5) an den Magnetkopfmitteln der zweiten Art (13) entlang mit der genannten Bandtransportgeschwindigkeit, und mit, falls die Magnetkopfmittel der zweiten Art zum Lesen von Information in digitaler Form vorgesehen sind, Expansionsmitteln (27; 37) zum Expandieren von Information, die in digitaler Form von dem Magnetband mit der genannten Bandtransportgeschwindigkeit gelesen ist, einem Digital-Analog-Wandler, und, falls die Magnetkopfmittel der zweiten Art zum Schreiben von Information in digitaler Form vorgesehen sind, einem Analog-Digital-Wandler und Kompressionsmitteln zum Komprimieren von Information in digitaler Form.

2. System nach Anspruch 1, wobei der Magnetkopf (15) der ersten Art eine Anzahl paralleler fluchtender Übertragungsspalte (18) in einer Kopffläche (16) aufweist, wobei diese Spalte (18) wenigstens ein Muster bilden zum Lesen und/oder Schreiben von Information in analoger Form auf einem Magnetband (5) in der einen Bandtransportrichtung, wobei das Muster in der Kopffläche (16) völlig auf der einen Seite der Mittellinie (17) der Kopffläche (16) senkrecht zu den Übertragungsspalten (18) liegt, dadurch gekennzeichnet, daß wenn die Kopfstirnfläche (60, 70) des Magnetkopfes (25, 28) der zweiten Art auf die Kopfstirnfläche (16) des Magnetkopfes (15) der ersten Art projiziert wird, wenigstens eine Projektion (100) eines Übertragungsspaltes (62, 63; 72, 73) des Magnetkopfes (60, 70) der zweiten Art auf jedem Übertragungsspalt (18) des Magnetkopfes (15) der ersten Art erreicht wird.

3. System nach Anspruch 2, dadurch gekennzeichnet, daß die Übertragungsspalte (108a, 108b, 109a, 109b) des Magnetkopfes (105) der zweiten Art ein weiteres Muster zum Lesen und/oder Schreiben der Informationen auf dem Magnetband (5) in einer anderen Bandtransportrichtung bilden, die zu der genannten Bandtransportrichtung entgegengesetzt ist.

4. System nach Anspruch 1, dadurch gekennzeichnet, daß der Magnetkopf (25) der zweiten Art eine Anzahl wenigstens im wesentlichen paralleler Übertragungsspalte (62, 63) umfaßt, die in einer Kopfstirnfläche (60) miteinander im wesentlichen in einer Linie ausgebildet sind, wobei die Spalte (62, 63) wenigstens ein Muster zum Lesen und/oder Schreiben von Informationen auf dem Magnetband (5) in einer Bandtransportrichtung bilden, wobei das Muster in der Kopfstirnfläche (25) liegt, und zwar völlig auf einer Seite einer Mittellinie (61) der Kopfstirnfläche senkrecht zu den Übertragungsspalten (62, 63).

5. System nach einem der vorstehenden Ansprüche 2 bis 4, dadurch gekennzeichnet, daß das Muster der Übertragungsspalte (62, 63) des Magnetkopfes (25) der zweiten Art neun Spalte umfaßt, von denen ein Spalt (63) einen zusätzlichen Spalt zum Lesen und/oder Schreiben zusätzlicher Informationen bildet, und die anderen acht Spalte (62), Hauptspalte bilden zum Lesen und/oder Schreiben der Informationen.

6. Magnetbandgerät zum wenigstens Wiedergeben von Audio-Signalen gemäß der Kompakt-Kassetten-Norm laut IEC Veröffentlichung 94 mit
- Magnetkopfmitteln zum Lesen und/oder Schreiben von Information in digitaler Form und zum wenigstens Lesen von Information in analoger Form in Längsspuren auf einem Magnetband (5),
- Bandtransportmitteln (10, 11, 12) für den transport des Magnetbandes an den Magnetkopfmitteln entlang mit einer Transportgeschwindigkeit entsprechend der genannten IEC-Veröffentlichung,
- wenn die Magnetkopfmittel zum Lesen von Information in digitaler Form vorgesehen sind, Expansionsmitteln (27; 37) zum Expandieren von Information, die in digitaler Form mit der genannten Transportgeschwindigkeit von dem Magnetband abgelesen worden ist, und einem Digital-Analog-Wandler, und
- wenn die Magnetkopfmittel zum Schreiben von Information in digitaler Form vorgesehen sind, einem Analog-Digital-Wandler und Kompressionsmitteln zum Komprimieren von Information in digitaler Form.

7. Magnetbandgerät nach Anspruch 6, dadurch gekennzeichnet, daß die Magnetkopfmittel einen Magnetkopf (25) aufweisen mit einer Anzahl im wesentlichen paralleler Übertragungsspalte (62, 63) in einer Kopfstirnfläche (60) im wesentlichen in einer Linie miteinander ausgebildet, welche Spalte (62, 63) mindestens ein Muster zum Lesen und/oder Schreiben von Informationen in einer analogen Form auf dem Magnetband (5) in einer Bandtransportrichtung bildet, wobei das Muster in der Kopfstirnfläche (25) gelegen ist und zwar völlig auf einer Seite einer Mittellinie (61) der Kopfstirnfläche senkrecht zu den Übertragungsspalten (62, 63).

8. Magnetbandgerät nach Anspruch 7, dadurch gekennzeichnet, daß die Übertragungsspalte (108a, 108b, 109a, 109b) des Magnetkopfes (105) ein weiteres Muster zum Lesen und/oder Schreiben der Informationen auf Magnetband (5) in einer anderen Bandtransportrichtung bilden, die zu der genannten Bandtransportrichtung entgegengesetzt ist.

9. Magnetbandgerät nach Anspruch 7 oder 8, dadurch gekennzeichnet, daß das Muster der Übertragungsspalte (62, 63) des Magnetkopfes (25) neun Spalte umfaßt, von denen ein Spalt (63) einen zusätzlichen Spalt zum Lesen und/oder Schreiben zusätzlicher Informationen bildet, und die anderen acht Spalte (62), Hauptspalte zum Lesen und/oder Schreiben der Informationen bilden.

10. Magnetbandgerät nach einem der Ansprüche 6 bis 9, dadurch gekennzeichnet, daß die Magnetkopfmittel (23; 33) einen Magnetkopf (35) aufweisen, der zum Lesen von Information in analoger Form sowie zum Lesen von Information in digitaler Form ausgebildet ist, wobei diese Magnetkopfmittel (23; 33) einen weiteren Magnetkopf (36) derselben Art aufweisen zum Aufzeichnen von Information wenigstens in digitaler Form.

11. Magnetbandgerät nach einem der Ansprüche 6 bis 10, dadurch gekennzeichnet, daß die Magnetkopfmittel (29a) eine Anzahl paralleler Übertragungsspalte (82, 83, 84) aufweisen, die in zwei Untermustern vorgesehen sind, wobei das erste Untermuster einem Muster von Übertragungsspalten (82, 83) wenigstens zum Lesen der Informationen in digitaler Form auf dem Magnetband in einer Bandtransportrichtung entspricht, und wobei das zweite Untermuster einem Muster von Übertragungsspalten (84) entspricht wenigstens zum Auslesen von Information in analoger Form auf dem Magnetband in einer Bandtransportrichtung.

12. Magnetbandgerät nach einem der vorstehenden Ansprüche 7, 10 oder 11, dadurch gekennzeichnet, daß wenigstens ein Magnetkopf (25; 28; 29a; 35, 36) der zweiten Art über wenigstens im wesentlichen 180° um eine Achse senkrecht zu der Kopfstirnfläche (50; 70; 80; 90, 95) drehbar ist.

13. Magnetkopfmittel zum Gebrauch bei einem System nach einem der Ansprüche 1 bis 6 oder zum Gebrauch als Magnetkopfmittel bei einem Gerät nach einem der Ansprüche 7 bis 14, wobei die Magnetkopfmittel (23; 33) einen Magnetkopf (35, 36; 29a; 110) einer zweiten Art aufweisen, wobei die Magnetkopfmittel (23; 33) zum Lesen und/oder Schreiben von Information in digitaler Form in Längsspuren auf einem Magnetband (5), sowie zum wenigstens Lesen von Information in digitaler Form von dem Magnetband (5) vorgesehen sind, wobei der Magnetkopf (35; 36; 29a; 110) elf parallele Übertragungsspalte aufweist, wobei diese Spalte zueinander fluchtend in einer Kopfstirnfläche vorgesehen sind, wobei diese Fläche durch eine Mittellinie senkrecht zu den Übertragungsspalten durchschnitten wird, wobei neun der genannten Übertragungsspalte mit einer ersten Breite zum Lesen und/oder Schreiben von Information in digitaler Form vorgesehen sind und zwei weitere der genannten Übertragungsspalte mit einer zweiten Breite zum wenigstens Lesen von Information in analoger Form vorgesehen sind, wobei neun Übertragungsspalte zum Lesen und/oder Schreiben von Information in digitaler Form in der einen Hälfte der Kopfstirnfläche vorgesehen sind und die zwei Übertragungsspalte zum wenigstens Lesen von Information in analoger Form in der anderen Hälfte der Kopfstirnfläche vorgesehen sind.

14. Magnetkopfmittel nach Anspruch 13, dadurch gekennzeichnet, daß der Magnetkopf (110) zwei Gruppen (114) von elf parallelen Übertragungsspalten enthält, die miteinander in einer Linie in einer Kopfstirnfläche angeordnet sind, welche durch eine Mittellinie (113) senkrecht zu den Übertragungsspalten geteilt ist, wobei die Gruppen (114) jeweils zwei Untergruppen enthalten, von denen die erste Untergruppe (116) Übertragungsspalte in einer Hälfte der Kopfstirnfläche (111) aufweist zum Lesen und/oder Schreiben von Information in digitaler Form, und wobei eine zweite Untergruppe (117) zwei Übertragungsspalte in der anderen Hälfte der Kopfstirnfläche (112) aufweist, wenigstens zum Lesen der Informationen in analoger Form, wobei in jeder Hälfte der Kopfstirnfläche (111, 112), eine erste Untergruppe (116; 119) einer der Gruppen (114) und eine zweite Untergruppe (117; 118) der anderen Gruppe (114) der Übertragungsspalte vorgesehen ist.

## Revendications

1. Système d'enregistrement longitudinal de bandes magnétiques comprenant
- des cassettes (4) ayant un boîtier, ledit boîtier comprenant deux parois principales sensiblement parallèles (41, 42) et une pluralité de parois transversales (43, 44, 45, 46), recevant deux bobines (47, 48) et une bande magnétique (5), ladite bande magnétique (5) étant enroulée au moins partiellement sur l'une des bobines (47, 48) et s'étendant en partie entre les deux bobines (47, 48) en travers d'une ouverture (49) ménagée dans l'une (43) des parois transversales du boîtier,
- un appareil (1) d'un premier type conçu pour coopérer avec l'une desdites cassettes (4) dans une première position de la cassette (4) et dans une deuxième position de la cassette (4), ladite deuxième position étant tournée d'au moins sensiblement 180° par rapport à la première position autour d'un axe qui s'étend parallèlement aux parois principales (41, 42) perpendiculairement à la paroi transversale (43) présentant l'ouverture (49) et à travers le centre de ladite paroi transversale (43), l'appareil du premier type (1) comprenant des moyens à têtes magnétiques d'un premier type (13) comprenant au moins une tête magnétique d'un premier type (15) pour lire et/ou inscrire des informations sous forme analogique sur la bande magnétique (5), et des moyens d'entraînement de bande (10, 11, 12) pour l'entraînement de la bande magnétique (5) en regard des moyens à têtes magnétiques du premier type (13) à une certaine vitesse d'entraînement, et
- un appareil (2; 3) d'un deuxième type, qui est conçu pour coopérer avec une cassette (4) et qui comprend des moyens à têtes magnétiques (23; 33) d'un deuxième type comprenant une tête magnétique (25; 35, 36; 29a; 28; 105; 110) d'un deuxième type, les moyens à têtes magnétiques (23; 33) du deuxième type étant conçus pour lire et/ou inscrire des informations sous forme numérique dans des pistes longitudinales sur la bande magnétique (5) et étant conçus également au moins pour lire des informations sous forme analogique sur la bande magnétique (5), l'appareil du deuxième type comprenant des moyens d'entraînement de bande (10, 11, 12) pour l'entraînement de la bande magnétique (5) en regard des moyens à têtes magnétiques du deuxième type (13) à ladite vitesse d'entraînement et comprenant, dans le cas où les moyens à têtes magnétiques du deuxième type sont conçus pour lire les informations sous forme numérique, des moyens d'expansion (27; 37) pour décomprimer des informations sous forme numérique lues sur la bande magnétique ayant ladite vitesse d'entraînement, un convertisseur numérique/analogique et, dans le cas où les moyens à têtes magnétiques du deuxième type sont conçus pour inscrire des informations sous forme numérique, un convertisseur analogique/numérique et des moyens de compression pour comprimer les informations sous forme numérique.

2. Système selon la revendication 1, dans lequel dans lequel la tête magnétique (15) du premier type comprend une pluralité d'entrefers de transmission (18) parallèles formés dans une face (16) de la tête en ligne les uns avec les autres, lesdits entrefers (18) formant au moins une configuration pour lire et/ou écrire des informations sous forme analogique sur la bande magnétique (5) dans un sens d'entraînement de la bande, la configuration étant située dans la face (16) de la tête entièrement d'un côté d'une ligne centrale (17) de la face de la tête perpendiculaire aux entrefers de transmission (18), caractérisé en ce que, lorsque la face (60, 70) de la tête magnétique (25, 28) du deuxième type est projetée sur la face (16) de la tête magnétique (15) du premier type, au moins une projection (100) d'un entrefer de transmission (62, 63; 72, 73) de la tête magnétique (60, 70) du deuxième type est obtenue sur chaque entrefer de transmission (18) de la tête magnétique (15) du premier type.

3. Système selon la revendication 2, caractérisé en ce que les entrefers de transmission (108a, 108b, 109a, 109b) de la tête magnétique (105) du deuxième type forment une autre configuration pour lire et/ou inscrire des informations sur la bande magnétique (5) dans un autre sens d'entraînement de la bande opposé audit sens d'entraînement de la bande.

4. Système selon la revendication 1, caractérisé en ce que la tête magnétique (25) du deuxième type comprend une pluralité d'entrefers de transmission au moins sensiblement parallèles (62, 63) formés dans une face (60) de la tête sensiblement en ligne les uns avec les autres, lesdits entrefers (62, 63) formant au moins une configuration pour lire et/ou inscrire des informations sur la bande magnétique (5) dans un sens d'entraînement de la bande, la configuration étant située dans la face de la tête (25), entièrement d'un côté d'une ligne centrale (61) de la face de la tête perpendiculaire aux entrefers de transmission (62, 63).

5. Système selon l'une quelconque des revendications 2 à 4, caractérisé en ce que la configuration d'entrefers de transmission (62, 63) de la tête magnétique (25) du deuxième type comprend neuf entrefers, dont un entrefer (63) constitue un entrefer auxiliaire pour lire et/ou inscrire des informations auxiliaires et les huit autres entrefers (62) forment des entrefers principaux pour lire et/ou inscrire les informations.

6. Appareil à bande magnétique pour au moins reproduire des signaux audio de cassettes conformes au standard de cassette compacte de la publication 94 de la CEI, comprenant
- des moyens à têtes magnétiques conçus pour lire et/ou inscrire des informations sous forme numérique et au moins lire des informations sous forme analogique dans des pistes longitudinales sur une bande magnétique (5),
- des moyens d'entraînement de bande (10, 11, 12) pour l'entraînement de la bande magnétique en regard des moyens à têtes magnétiques à une vitesse d'entraînement selon ladite publication de la CEI,
- dans le cas où les moyens à têtes magnétiques sont conçus pour lire des informations sous forme numérique, des moyens d'expansion (27; 37) pour décomprimer les informations sous forme numérique lues sur la bande magnétique ayant ladite vitesse d'entraînement, et un convertisseur numérique/analogique, et
- dans le cas où les moyens à têtes magnétiques sont conçus pour inscrire des informations sous forme numérique, un convertisseur analogique/numérique et des moyens de compression pour comprimer les informations sous forme numérique.

7. Appareil à bande magnétique selon la revendication 6, caractérisé en ce que les moyens à têtes magnétiques comprennent une tête magnétique (25) ayant une pluralité d'entrefers de transmission au moins sensiblement parallèles (62, 63) formés dans une face (60) de la tête et sensiblement en ligne les uns avec les autres, lesdits entrefers (62, 63) formant au moins une configuration pour lire et/ou inscrire des informations sur la bande magnétique (5) dans un sens d'entraînement de la bande, la configuration étant située dans la face de la tête (25) entièrement d'un côté d'une ligne centrale (61) de la face de la tête perpendiculaire aux entrefers de transmission (62, 63

8. Appareil à bande magnétique selon la revendication 7, caractérisé en ce que les entrefers de transmission (108a, 108b, 109a, 109b) de la tête magnétique (105) forment une autre configuration pour lire et/ou inscrire des informations sur la bande magnétique (5) dans un autre sens d'entraînement de la bande opposé audit sens d'entraînement de la bande.

9. Appareil à bande magnétique selon la revendication 7 ou 8, caractérisé en ce que la configuration d'entrefers de transmission (62, 63) de la tête magnétique (25) comprend neuf entrefers dont un entrefer (63) forme un entrefer auxiliaire pour lire et/ou inscrire des informations auxiliaires et les autres huit entrefers (62) forment des entrefers principaux pour lire et/ou inscrire les informations.

10. Appareil à bande magnétique selon l'une quelconque des revendications 6 à 9, caractérisé en ce que les moyens à têtes magnétiques (23; 33) comprennent une tête magnétique (35) qui est conçue pour lire à la fois des informations sous forme analogique et des informations sous forme numérique, lesdits moyens à têtes magnétiques (23; 33) comprenant une autre tête magnétique (36) du deuxième type pour enregistrer des informations au moins sous forme numérique.

11. Appareil à bande magnétique selon l'une quelconque des revendications 6 à 10, caractérisé en ce que les moyens à têtes magnétiques (29a) comprennent une pluralité d'entrefers de transmission parallèles (82, 83, 84) qui sont agencés en deux sous-configurations, la première sous-configuration correspondant à une configuration d'entrefers de transmission (82, 83) pour au moins lire des informations sous forme numérique sur la bande magnétique dans un sens d'entraînement de bande et la deuxième sous-configuration correspondant à une configuration d'entrefers de transmission (84) pour au moins lire des informations sous forme analogique sur la bande magnétique dans un sens d'entraînement de la bande.

12. Appareil à bande magnétique selon l'une quelconque des revendications précédentes 7, 10 ou 11, caractérisé en ce qu'au moins une tête magnétique (25; 28; 29a; 35, 36) du deuxième type peut tourner sur au moins sensiblement 180° autour d'un axe perpendiculaire à la face (60; 70; 80; 90, 95) de la tête.

13. Moyens à têtes magnétiques susceptibles d'être utilisés dans un système selon l'une quelconque des revendications 1 à 6 ou utilisés comme moyens à têtes magnétiques d'un appareil selon l'une quelconque des revendications 7 à 14, les moyens à têtes magnétiques (23; 33) comprenant une tête magnétique (35, 36; 29a; 110) d'un deuxième type, les moyens à têtes magnétiques (23; 33) étant conçus pour lire et/ou inscrire des informations sous forme numérique dans des pistes longitudinales sur la bande magnétique (5) et étant conçus également pour au moins lire des informations sous forme analogique sur la bande magnétique (5), la tête magnétique (35; 36; 29a; 110) comprenant onze entrefers de transmission parallèles, lesdits entrefers étant disposés en ligne les uns avec les autres dans une face de la tête, ladite face de tête étant coupée en deux par une ligne centrale perpendiculaire aux entrefers de transmission, neuf desdits entrefers de transmission ayant une première largeur étant configurés pour lire et/ou inscrire les informations sous forme numérique et deux autres desdits entrefers de transmission ayant une deuxième largeur étant configurés pour au moins lire les informations sous forme analogique, neuf entrefers de transmission pour lire et/ou inscrire les informations sous forme numérique étant prévus dans une moitié de la face de la tête et les deux entrefers de transmission pour au moins lire les informations sous forme analogique étant prévus dans l'autre moitié de la face de la tête.

14. Moyens à têtes magnétiques selon la revendication 13, caractérisés en ce que la tête magnétique (110) comprend deux groupes (114) de onze entrefers de transmission parallèles qui sont disposés en ligne les uns avec les autres dans une face de la tête qui est coupée en deux par une ligne centrale (113) perpendiculaire aux entrefers de transmission, lesdits groupes (114) comprenant chacun deux sous-groupes, à savoir un premier sous-groupe (116) ayant neuf entrefers de transmission dans une moitié de la face (111) de la tête pour lire et/ou inscrire des informations sous forme numérique, et un deuxième sous-groupe (117) ayant deux entrefers de transmission dans l'autre moitié de la face (112) de la tête pour au moins lire des informations sous forme analogique, un premier sous-groupe (116; 119) de l'un des groupes (114) et un deuxième sous-groupe (117; 118) de l'autre groupe (114) d'entrefers de transmission étant prévus dans chaque moitié de la face (111, 112) de la tête.
